# EUROPÄISCHE PATENTSCHRIFT

(11) **EP 3 525 910 B1**
(45) Veröffentlichungstag und Bekanntmachung des Hinweises auf die Patenterteilung: **31.03.2021**
(21) Anmeldenummer: 17764825.0
(22) Anmeldetag: 12.09.2017
(51) Int. Cl.: B01D 46/00, B01D 46/24

(54) **FILTEREINRICHTUNG UND RUNDFILTERELEMENT, INSBESONDERE ZUR GASFILTRATION**
FILTER DEVICE AND ROUND FILTER ELEMENT, IN PARTICULAR FOR GAS FILTRATION
INSTALLATION DE FILTRE ET ÉLÉMENT DE FILTRE ROND, EN PARTICULIER POUR LA FILTRATION DE GAZ

(30) Priorität: 17.10.2016 DE 102016012325
(43) Veröffentlichungstag der Anmeldung: 21.08.2019
(73) Patentinhaber: Mann+Hummel GmbH, 71636 Ludwigsburg (DE)
(72) Erfinder: NEEF, Pascal, 78647 Trossingen (DE); DONAUER, Nadine, 70736 Fellbach (DE); WAGNER, Fabian, 72127 Kusterdingen (DE); FRITZSCHING, Torsten, 71665 Vaihingen (DE)
(74) Vertreter: Nickolaus, Mathias
(86) Internationale Anmeldenummer: PCT/EP2017/072836
(87) Internationale Veröffentlichungsnummer: WO 2018/072928

(56) Entgegenhaltungen:
- EP-A1- 1 621 757
- WO-A1-2004/009210
- WO-A1-2006/013330
- WO-A1-2009/012010
- WO-A1-2009/106589
- DE-A1-102004 053 118
- US-A1- 2006 107 638
- US-A1- 2016 131 094

## Beschreibung

### Technisches Gebiet

Die Erfindung bezieht sich auf eine Filtereinrichtung, insbesondere zur Gasfiltration, nach dem Oberbegriff des Anspruches 1.

### Stand der Technik

In DE 10 2004 053 118 A1 wird eine Luftfiltervorrichtung für eine Brennkraftmaschine beschrieben, die ein hohlzylindrisches Filterelement in einem Filtergehäuse aufweist, wobei das Filterelement radial von innen nach außen von der zu reinigenden Luft durchströmt wird. Die Luft wird über eine offene axiale Stirnseite in das Innere eines Filtermediumkörpers des Filterelementes geleitet und durchströmt die Wandung des Filtermediumkörpers radial von innen nach außen. Anschließend wird die gereinigte Luft über einen Auslassstutzen aus der Luftfiltervorrichtung abgeleitet.

Das Filterelement wird auf einen Einlassstutzen aufgesetzt, der sich am Boden des Filtergehäuses befindet und im montierten Zustand in den Innenraum im Filterelement hineinragt. Die einzuleitende Luft strömt über den Einlassstutzen axial in den Innenraum im Filterelement hinein und wird anschließend in Radialrichtung zur Durchströmung des Filtermediumkörpers umgelenkt.

Aus WO 2006/013330 A1 ist ein hohlzylindrisches Filterelement bekannt, welches an einer Endscheibe eine Einlassleitung zum Zuführen von Gas in den Innenraum aufweist. Die Einlassleitung hat mindestens einen helixförmigen Abschnitt an seiner Innenwand, so dass das Gas helixförmig ausströmt.

In WO 2009/012010 A1 ist eine Filtereinrichtung mit einem Filterkopf mit gegenüberliegendem Ein- und Auslass und einem daran befestigten Filtergehäuse mit Filterelement beschrieben, wobei das Filterelement mit einem schräg verlaufenden Flansch mit S-förmigem Querschnitt ausgebildet ist. Durch die diagonale Durchgangsöffnung mit nichtebener Fläche soll der Druckverlust verringert werden.

### Offenbarung der Erfindung

Der Erfindung liegt die Aufgabe zugrunde, eine Filtereinrichtung mit einem Rundfilterelement, das einen innenliegenden Strömungsraum aufweist und radial von innen nach außen von zu reinigendem Fluid durchströmt wird, mit einfachen konstruktiven Maßnahmen so auszubilden, dass über einen langen Betriebszeitraum eine hohe Filtrationsleistung gegeben ist.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung weist ein Rundfilterelement und ein Filtergehäuse zur Aufnahme des Rundfilterelementes auf. Das Rundfilterelement umfasst einen Filtermediumkörper, dessen Wandung von dem zu reinigenden Fluid bezogen auf die Längsachse des Filtermediumkörpers in Radialrichtung durchströmbar ist; ferner jeweils eine Endscheibe an gegenüberliegenden Stirnseiten des Filtermediumkörpers. Die Rohseite befindet sich in einem innenliegenden Strömungsraum im Filtermediumkörper, und an der Außenwand des Filtermediumkörpers ist ein Stützgitter angeordnet. Das Filtergehäuse umfasst einen Gehäusedeckel, der an einer Innenseite eine Strömungsleitrippe aufweist, die in den innenliegenden Strömungsraum des Rundfilterelementes einragt.

Zum Filtergehäuse gehört ein Gehäusedeckel, der auf das Filtergrundgehäuse aufsetzbar ist, um den Aufnahmeraum im Filtergrundgehäuse, in welchen das Filterelement eingesetzt ist, zu verschließen. An der Innenseite des Gehäusedeckels ist demgemäß eine schwertförmige Strömungsleitrippe angeordnet, welche die Einleitung des Fluidstroms in den innenliegenden Strömungsraum und die gleichmäßige Partikelbeladung des Filterelementes bei der Filtration des Fluids unterstützt, insbesondere auch bei nicht-symmetrischen oder nicht-parallelen Strömungsverhältnissen. Das ungereinigte Fluid wird von außen radial in Richtung des Filtermediumkörpers geleitet und trifft dann auf die Strömungsleitrippe an der Innenseite des Gehäusedeckels, die den auftreffenden Fluidstrom beeinflusst, beispielsweise zweiteilt und/oder axial in Richtung des innenliegenden Strömungsraums des Filtermediumkörpers geleitet.

Das Rundfilterelement ist so ausgebildet, dass es eine offene Endscheibe hat, die eine Strömungsöffnung aufweist, durch die die Strömungsleitrippe ragt, wobei über bzw. durch die Strömungsöffnung das ungereinigte Fluid in den innenliegenden Strömungsraum im Filtermediumkörper eingeleitet wird.

Der Filtermediumkörper ist bevorzugt in Radialrichtung von innen nach außen durchströmbar.

In den Gehäusedeckel ist eine seitliche Strömungsöffnung eingebracht, die als Einströmöffnung ausgebildet ist. Bevorzugt korrespondiert die Einströmöffnung mit einer weiteren Einströmöffnung, die in das Filtergrundgehäuse eingebracht ist, derart dass bei aufgesetztem Gehäusedeckel die Einströmöffnungen übereinanderliegen.

Insbesondere kann die Strömungsleitrippe dabei eine Krümmung aufweisen, bevorzugt derart, dass eine über die Einströmöffnung des Gehäusedeckels radial herangeführte Fluidströmung durch die Strömungsleitrippe eine Ablenkung in Richtung des innenliegenden Strömungsraums des Filtermediumkörpers erfährt.

Gemäß dieser Ausführungsform ist vorteilhafterweise auch in dem Filtergrundgehäuse des Filtergehäuses eine seitliche Einströmöffnung für das heranzuführende Fluid eingebracht, wobei diese Einströmöffnung in dem Filtergrundgehäuse und die seitliche Einströmöffnung im Gehäusedeckel im montierten Zustand übereinanderliegen und einen durchgehenden Strömungsweg für das herangeführte Fluid bilden.

Es kommen jedoch verschiedene Ausführungen der Strömungsleitrippe in Betracht. Die Strömungsleitrippe ist entweder geradlinig und in einer Ebene liegend ausgebildet oder, gemäß einer alternativen Ausführung, gekrümmt ausgeführt. Die Strömungsleitrippe kann sich bei geradliniger Ausführung in Achsrichtung des Filterelementes erstrecken, so dass die Wandseiten der Strömungsleitrippe parallel zur Längsachse des Filterelementes verlaufen.

Alternativ oder zusätzlich kann vorgesehen sein, dass eine Stirnseite der Strömungsleitrippe der Strömungsöffnung im Gehäusedeckel zugewandt ist. Die Strömungsleitrippe kann insbesondere benachbart zu der Einströmöffnung im Gehäusedeckel angeordnet sein, d. h. in der Weise positioniert sein, dass die Stirnseite der Strömungsleitrippe der Einströmöffnung im Gehäusedeckel zugewandt ist.

Die über den Gehäusedeckel radial herangeführte Fluidströmung trifft auf die Strömungsleitrippe und erfährt eine Ablenkung in Richtung des innenliegenden Strömungsraums im Filtermediumkörper. Die Strömungsleitrippe und die Einströmöffnung können ferner zumindest annähernd parallel ausgerichtet sein.

Gemäß einer weiteren zweckmäßigen Ausführung ist in das Filtergrundgehäuse eine seitliche, vorzugsweise in Radialrichtung weisende Abströmöffnung eingebracht, über die das gereinigte Fluid abströmt. Es kann zweckmäßig sein, dass die Abströmöffnung zumindest annähernd parallel zur Einströmöffnung sowie zur Strömungsleitrippe ausgerichtet ist.

Gemäß einer weiteren zweckmäßigen Ausführung steht das Filterelement im eingebauten Zustand axial geringfügig über die Stirnseite des Filtergrundgehäuses hinaus, wodurch die Entnahme des Filterelementes aus dem Filtergrundgehäuse, beispielsweise zu Wartungszwecken, erleichtert wird. Der Dichtungsträger mit dem Dichtungselement liegt mit kleinem axialen Abstand zur herausragenden Stirnseite des Filterelementes und sorgt für die strömungsdichte Separierung zwischen dem außenliegenden Abschnitt des Filterelementes und dem innenliegenden im Filtergrundgehäuse aufgenommenen Abschnitt des Filterelementes.

Die erfindungsgemäße Filtereinrichtung mit Rundfilterelement wird bevorzugt zur Gasfiltration eingesetzt, beispielsweise zur Filtration von Luft, insbesondere im Ansaugtrakt einer Brennkraftmaschine eines Fahrzeugs. Das Filterelement weist einen ringförmig geschlossenen Filtermediumkörper auf, dessen Wandung von dem zu reinigenden Fluid in Radialrichtung durchströmt wird. Der Filtermediumkörper umschließt einen innenliegenden Strömungsraum, der von der Innenwand des Filtermediumkörpers begrenzt wird, wobei die Innenwand die Rohseite bildet. Das zu reinigende Fluid wird axial in den innenliegenden Strömungsraum hineingeleitet und durchströmt die Wandung des Filtermediumkörpers bezogen auf dessen Längsachse in Radialrichtung. Die Außenseite des Filtermediumkörpers bildet die Reinseite, über die das gereinigte Fluid aus der Wandung des Filtermediumkörpers austritt. Die axialen Stirnseiten des Filtermediumkörpers sind von Endscheiben strömungsdicht abgedeckt. Eine Endscheibe weist eine mit dem innenliegenden Strömungsraum kommunizierende, zentrale Öffnung für die axiale Strömungsführung des Fluids auf, die gegenüberliegende Endscheibe ist dagegen geschlossen ausgebildet und schließt den innenliegenden Strömungsraum axial nach außen dicht ab.

Zweckmäßigerweise ist die mit der zentralen Öffnung versehene Endscheibe am Filterelement an ihrer radialen Innenseite abgerundet ausgebildet, wodurch das Hineinströmen der Rohluft in den Innenraum im Filtermediumkörper erleichtert wird. Dies ist bei der Einströmung in den Innenraum des Filterelementes zur Minimierung des Gesamtdruckverlustes von besonderer Bedeutung, wenn wie vorliegend bevorzugt die Luft frei in den Innenraum einströmt und wie weiter vorliegend bevorzugt kein den Luftstrom direkt in den Innenraum führendes Strömungsrohr vorgesehen ist. Der Radius der Rundung ist an der radialen Innenseite der Endscheibe vorteilhafterweise größer als an der radialen Außenseite. Der Radius an der radialen Innenseite ist ggf. so groß ausgeführt, dass der Beginn des Radius an der Stirnseite noch innerhalb der Kontur des Filtermediumkörpers liegt. Der Radius der Rundung an der radialen Innenseite der Endscheibe liegt beispielsweise in einem Bereich zwischen 5 mm und 15 mm, z.B. bei 7.5 mm.

Das Rundfilterelement und der Filtermediumkörper können hohlzylindrisch ausgebildet sein, so dass der innenliegende Strömungsraum zylinderförmig ist. Des Weiteren sind Ausführungen möglich, bei denen das Rundfilterelement und der Filtermediumkörper längs gestreckt ausgebildet sind und eine ovale oder ovalisierte Querschnittsform haben. Bei längs gestreckten Querschnittsformen sind auch Querschnittsformen mit parallelen Längsseiten und halbkreisförmigen Schmalseiten möglich. Des Weiteren kommen konkave oder konvexe Längsseiten mit radial nach innen gerichteten Wölbungen oder radial nach außen gerichteten Wölbungen in Betracht. Bevorzugt verlaufen die Innenwand und die Außenwand des Filtermediumkörpers konzentrisch zueinander, so dass der Filtermediumkörper eine konstante radiale Dicke aufweist. Bevorzugt verlaufen die Innenwand und die Außenwand des Filtermediumkörpers konzentrisch zueinander, so dass der Filtermediumkörper eine konstante radiale Dicke aufweist.

Gemäß einer weiteren zweckmäßigen Ausführung weist das Rundfilterelement eine sich in Achsrichtung verjüngende Querschnittsform auf, so dass der Außenumfang des Rundfilterelementes im Bereich der ersten Endscheibe unterschiedlich groß ist im Vergleich zum Außenumfang des Rundfilterelementes im Bereich der gegenüberliegenden, zweiten Endscheibe. Auch in dieser Ausführung kommen runde Querschnittsformen im Bereich beider Endscheiben in Betracht, so dass das Rundfilterelement und der Filtermediumkörper konusförmig ausgebildet sind. Des Weiteren ist es möglich, im Bereich beider Endscheiben jeweils eine ovale oder ovalisierte Querschnittsform vorzusehen.

Bei einer sich verjüngenden Querschnittsform des Rundfilterelementes kann die Endscheibe an der Stirnseite mit kleinerem Außenumfang geschlossen ausgebildet sein und den innenliegenden Strömungsraum axial verschließen, wohingegen die gegenüberliegende Endscheibe am größeren Außenumfang eine Strömungsöffnung für das Einleiten von Fluid in den innenliegenden Strömungsraum aufweist.

Des Weiteren sind Ausführungen möglich, bei denen die Endscheibe an der Stirnseite mit größerem Außenumfang geschlossen ausgebildet ist und den innenliegenden Strömungsraum axial verschließt und die gegenüberliegende Endscheibe am kleineren Außenumfang eine Strömungsöffnung für das Einleiten von Fluid in den innenliegenden Strömungsraum aufweist.

Das Rundfilterelement weist an der Außenwand des Filtermediumkörpers ein Stützgitter auf, das insbesondere formstabil ausgebildet ist. Das Stützgitter ist beispielsweise als thermoplastisches Spritzgussteil ausgebildet. Aufgrund der Durchströmung des Filtermediumkörpers radial von innen nach außen unterliegt die Wandung des Filtermediumkörpers einem radial nach außen gerichteten Druck, unter dem die Wandung bestrebt ist, sich nach außen zu wölben. Das Stützgitter an der Außenwand des Filtermediumkörpers verhindert eine Verformung der Wandung radial nach außen und hält somit während der Filtration den Filtermediumkörper in Form, so dass eine Verformung vermieden wird. Dementsprechend behält der Filtermediumkörper über einen langen Betriebszeitraum seine ursprüngliche geometrische Gestalt bei, und es bleiben die Strömungsverhältnisse bei der Filtration des Fluids erhalten. Außerdem erfährt der Filtermediumkörper an der Außenseite eine Abstützung durch das Stützgitter, so dass der Filtermediumkörper geringeren Belastungen unterworfen und die Gefahr einer Schädigung des Filtermediumkörpers herabgesetzt ist. Vorteilhafterweise ist mindestens eine Stirnseite des Stützgitters, ggf. beide Stirnseiten in die Endscheiben eingebettet. Mindestens eine Endscheibe besteht bevorzugt aus einem weicheren Material als das Stützgitter und ein Dichtungsträger am Filterelement, der ein Dichtungselement aufnimmt. Bevorzugt ist die Endscheibe oder sind die Endscheiben aus einer gießbaren Masse hergestellt, wie beispielsweise und bevorzugt Polyurethan (PUR), insbesondere Polyurethanschaum.

Der Filtermediumkörper ist bevorzugt als Faltenfilter mit einer Vielzahl von Filterfalten ausgebildet. Die Filterfalten verlaufen bevorzugt in oder annähernd in Radialrichtung und damit in Durchströmungsrichtung und erstrecken sich zugleich axial zwischen den beiden Stirnseiten des Filtermediumkörpers. Der Faltenfilter ist ringförmig geschlossen ausgebildet.

Es ist insbesondere genau ein als Rundfilter ausgebildeter Filtermediumkörper im Filterelement angeordnet.

Gemäß einer weiteren vorteilhaften Ausführung ragt in eine Stirnseite des Filtermediumkörpers ein Formkörper hinein, der den Filtermediumkörper zusätzlich stabilisiert und in der Ausführung als Faltenfilter die Filterfalten in der gewünschten Position hält. In der Ausführung mit einer sich verjüngenden Querschnittsfläche befindet sich der Formkörper bevorzugt an der Stirnseite mit reduzierter Querschnittsfläche. Der Formkörper kann einteilig mit dem Stützgitter am Filtermediumkörper ausgebildet sein, so dass Stützkräfte, die auf die Stirnseite des Filterelementes mit dem Formkörper wirken, über den Formkörper auf das Stützgitter geleitet werden und die Endscheibe von den Stützkräften entlastet wird.

Die Außenkontur des Formkörpers entspricht vorteilhafterweise der Außenkontur und/ oder der Innenkontur des Filtermediumkörpers an deren Stirnseite, in die der Formkörper in den Filtermediumkörper hineinragt. Es kann zweckmäßig sein, den Formkörper zumindest abschnittsweise mit der benachbarten Endscheibe zu verbinden, beispielsweise am Formkörper einen Dom auszubilden, der in die Endscheibe hineinragt. Die Endscheibe, in die ein oder mehrere Abschnitte des Formkörpers hineinragen, ist vorzugsweise geschlossen ausgebildet und dichtet den Innenraum im Filtermediumkörper strömungsdicht ab. Der Formkörper kann sich ggf. zu seiner freien Stirnseite hin keilförmig verjüngen, wodurch der Herstellungsprozess des Filterelementes vereinfacht und unterstützt wird. Der Formkörper ist insbesondere als längs gestreckter Körper ausgebildet und erstreckt sich zwischen gegenüberliegenden Seiten des Stützgitters.

Gemäß einer vorteilhaften Ausführung weist das Rundfilterelement ein Dichtungselement auf, insbesondere einen umlaufenden Dichtungsring, das an einem separat von der Endscheibe ausgebildeten Dichtungsträger angeordnet und benachbart zur rohluftseitigen Endscheibe, über die das ungereinigte Fluid in den innenliegenden Strömungsraum eingeleitet wird, angeordnet ist. Das Dichtungselement liegt hierbei axial und radial auf Abstand zu der benachbarten, nächstgelegenen Endscheibe. Über das Dichtungselement erfolgt eine strömungsdichte Separierung der Roh- von der Reinseite. Aufgrund der separaten Ausführung des Dichtungsträgers von der Endscheibe ist die Endscheibe nicht den Halte- und Dichtkräften unterworfen, die über das Dichtungselement und den Dichtungsträger in Einbausituation des Rundfilterelementes aufgenommen werden. Die Endscheibe bleibt somit unbeeinflusst von den Halte- und Dichtkräften. Aufgrund des Abstandes des Dichtungselementes und vorteilhafterweise auch des Dichtungsträgers axial und radial zur benachbarten Endscheibe weisen Dichtungsträger und Dichtungselement auch einen Abstand zur Rein- bzw. Außenseite des Filtermediumkörpers auf, so dass das Fluid ungehindert vom Dichtungsträger und vom Dichtungselement über die Reinseite des Filtermediumkörpers austreten kann. Der Dichtungsträger ist fluiddicht ausgebildet und verbindet vorteilhafterweise die nächstgelegene Endscheibe fluiddicht mit dem Dichtungselement.

Der Dichtungsträger ist zur Stirnseite der benachbarten, nächstgelegenen Endscheibe axial beabstandet. Der axiale Abstand beträgt beispielsweise, bezogen auf die gesamte axiale Höhe des Filterelementes, maximal 30% der axialen Höhe, bevorzugt maximal 20% der axialen Höhe oder maximal 10% der axialen Höhe.

Gemäß einer bevorzugten Ausführung ist der Dichtungsträger an dem Stützgitter angeordnet. Es kommt insbesondere eine einteilige Ausführung von Stützgitter und Dichtungsträger in Betracht, die vorzugsweise als Kunststoffbauteile ausgebildet sind. Die Dicht- und Halte- sowie Stützkräfte werden entsprechend über den Dichtungsträger und das Stützgitter aufgenommen, wohingegen der Filtermediumkörper von diesen Kräften entlastet ist.

Gemäß einer weiteren vorteilhaften Ausführung ist der Dichtungsträger als eine umlaufende Trägerwand ausgebildet, die auf Abstand zur außenliegenden Mantelfläche des Filtermediumkörpers verläuft. Die Trägerwand verläuft insbesondere parallel zu der außenliegenden Mantelfläche des Filtermediumkörpers. Das Dichtungselement ist vorteilhafterweise in eine Aufnahmenut in der Trägerwand eingesetzt, wobei sich die Aufnahmenut bevorzugt an oder benachbart zu einer Stirnfläche der Trägerwand befindet. Die Position des Dichtungselementes an der Trägerwand befindet sich auf der der nächstliegenden Endscheibe abgewandten Stirnfläche der Trägerwand.

In einer bevorzugten Ausführungsform ist der Dichtungsträger bzw. die Trägerwand insbesondere an der von dem Dichtungselement abgewandten Stirnseite des Dichtungsträgers bzw. der Trägerwand dichtend und bevorzugt formschlüssig mit der dem Dichtungselement nächstliegenden Endscheibe, d. h. der offenen Endscheibe, verbunden, insbesondere in diese eingebettet oder mit dieser verklebt. In Fällen, in welchen Dichtungsträger und Stützgitter einstückig ausgebildet sind, kann vorteilhaft die Einheit aus Dichtungsträger und Stützgitter so jeweils mit beiden Endscheiben verbunden werden, bevorzugt jeweils durch Einbetten der jeweiligen stirnseitigen Enden in die jeweilige Endscheibe, so dass die stirnseitigen Enden von Dichtungsträger und Stützgitter formschlüssig von den Endscheiben umschlossen sind.

Der Dichtungsträger stützt sich vorteilhafterweise in Einbaulage an einem Gehäusebauteil ab, beispielsweise an einem innenliegenden Absatz in einem Filtergrundgehäuse, das das Filterelement aufnimmt und auf das ein Gehäusedeckel aufsetzbar ist.

An der Stirnfläche, insbesondere an der Oberseite des Dichtungsträgers können ggf., vorteilhafterweise mit axialem Abstand zur Stirnfläche, Noppen angeformt sein. Diese Noppen haben die Funktion eines Toleranzausgleichs und können Abweichungen des Dichtungsträgers von einer planen Fläche für das Aufsetzen des Gehäusedeckels und/ oder das Aufsetzen auf den Absatz im Filtergrundgehäuse kompensieren. Die Noppen sind beispielsweise stabförmig ausgebildet und liegen parallel zur Seitenwand des Dichtungsträgers; die stabförmigen Noppen verlaufen z.B. in Radialrichtung. In Einbaulage drücken sich die Noppen in das Material des Gehäusebauteils hinein und/oder die Noppen werden insbesondere elastisch oder plastisch und verformt und gleichen hierdurch Toleranzabweichungen aus. Bevorzugt wird für die Noppen ein weicherer Werkstoff gewählt als für das Gehäusebauteil (insbesondere der Gehäusedecke), so dass die Verformung im Wesentlichen oder vollständig bei den Noppen erfolgt.

Gemäß einer weiteren zweckmäßigen Ausführung, die sich vorzugsweise auf ein Rundfilterelement mit einer sich in Achsrichtung verjüngenden Querschnittsform bezieht, weist die kleinere Endscheibe radial überstehende Stütznocken auf. Vorteilhafterweise ragen diese Stütznocken in Radialrichtung nicht weiter hinaus als die gegenüberliegende Endscheibe oder die Innen- oder Außenkontur der gegenüberliegenden Dichtung. Es kann jedoch auch ein leichter Überstand vorgesehen sein, um eine besonders starke Verspannung zu erzielen. Die Innenkontur von Dichtungsträger und/oder Dichtungselement verlaufen vorteilhafterweise in Radialrichtung im Wesentlichen entlang des Außenumfangs der größeren Endscheibe.

Im Fall einer ovalen oder ovalisierten Querschnittsform des Filtermediumkörpers befinden sich die Stütznocken vorzugsweise an den Längsseiten und sind insbesondere an der Endscheibe, vorzugsweise an der kleineren Endscheibe angeordnet, insbesondere einteilig mit der Endscheibe ausgebildet und an dieser angeformt. Es ist aber auch möglich, zusätzlich an der Schmalseite einen oder mehrere Nocken an der Endscheibe anzuordnen. Die Nocken ragen in Radialrichtung über die Endscheibe hinaus und stützen bevorzugt das Rundfilterelement im eingebauten Zustand am aufnehmenden Filtergehäuse ab.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung zur Gasfiltration, mit einem Filtergrundgehäuse, einem Filterelement und einem Gehäusedeckel,
- Fig. 2: in perspektivischer Ansicht die Filtereinrichtung im montierten Zustand,
- Fig. 3: eine perspektivische Ansicht des Filterelementes von oben,
- Fig. 4: eine perspektivische Ansicht des Filterelementes von unten,
- Fig. 5: eine Innenansicht des Gehäusedeckels, mit einer Strömungsleitrippe an der Innenseite des Gehäusedeckels,
- Fig. 6: in perspektivischer Ansicht einen Schnitt durch die Filtereinrichtung im Bereich des Gehäusedeckels,
- Fig. 7: einen weiteren Schnitt durch die Filtereinrichtung.

In den Figuren sind gleiche Bauteile mit gleichen Bezugszeichen versehen.

### Ausführungsform(en) der Erfindung

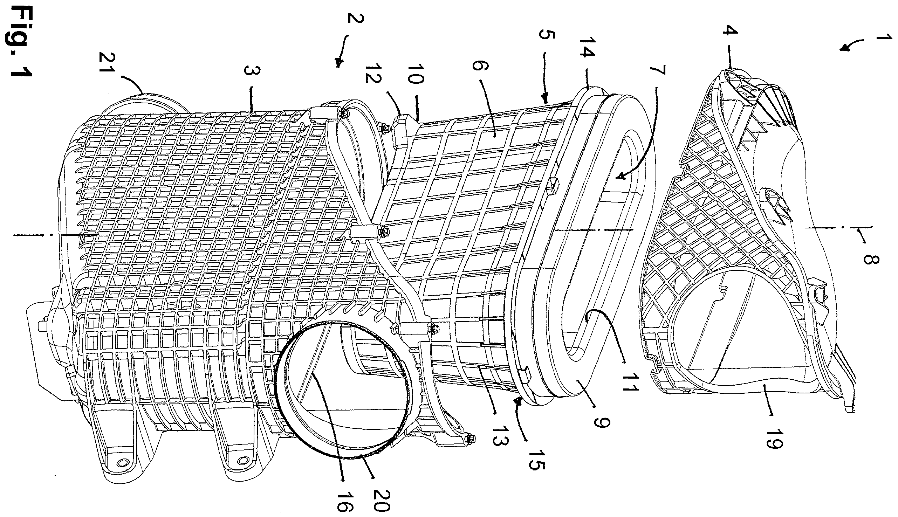

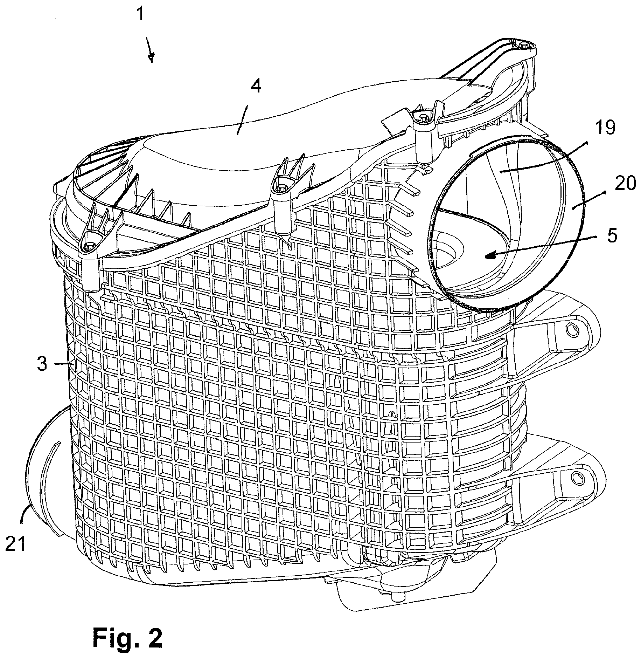

In Fig. 1, 2, 6 und 7 ist eine Filtereinrichtung 1 dargestellt, die vorzugsweise zur Gasfiltration, insbesondere zur Luftfiltration im Ansaugtrakt einer Brennkraftmaschine eingesetzt wird. Die Filtereinrichtung 1 umfasst ein Filtergehäuse 2, das sich aus einem Filtergrundgehäuse 3 und einem Gehäusedeckel 4 zusammensetzt, und ein Filterelement 5, das in das Filtergrundgehäuse 3 einsetzbar ist. Der Gehäusedeckel 4 verschließt den Aufnahmeraum im Filtergrundgehäuse zur Aufnahme des Filterelementes 5.

Das Filterelement 5 ist, wie den Fig. 1, 3 und 4 zu entnehmen, mit einem Filtermediumkörper 6 ausgestattet, an dem die Filtration des zu reinigenden Fluids stattfindet. Das Filterelement 5 ist als Rundfilterelement ausgebildet, entsprechend ist auch der Filtermediumkörper 6 als Rundelement ausgebildet, das einen innenliegenden Strömungsraum 7 einschließt, in den das zu reinigende Fluid eingeleitet wird. Das Fluid wird axial bezogen auf die Längsachse 8 des Filterelementes 5 und der Filtereinrichtung 1 (Fig. 1), in den Strömungsraum 7 eingeführt. Anschließend durchströmt das Fluid die Wandung des Filtermediumkörpers 6 radial von innen nach außen. Dementsprechend bildet die Innenwand des Filtermediumkörpers 6 die Rohseite und die Außenwand die Reinseite.

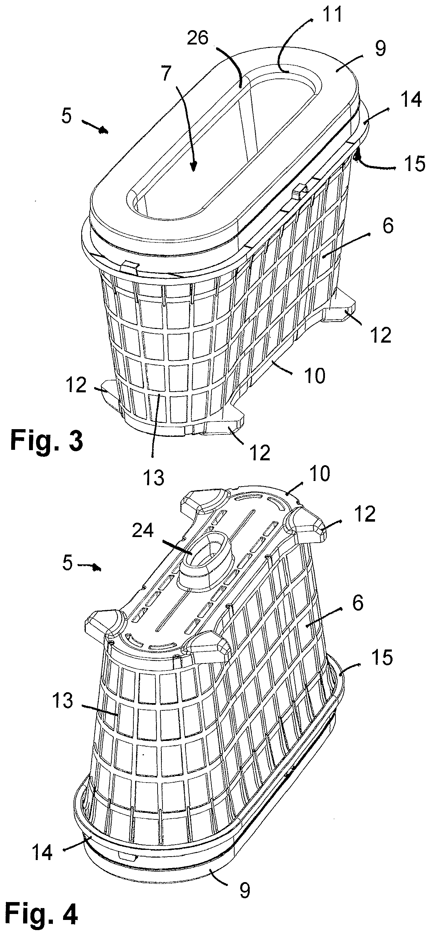

Das Filterelement 5 und der Filtermediumkörper 6 besitzen eine stark ovalisierte Form mit zwei parallel verlaufenden Längsseiten und halbkreisförmigen Schmalseiten. Außerdem besitzt das Filterelement 5 eine konusförmige Grundform, bei der die axial gegenüberliegenden Stirnseiten des Filterelementes 5 unterschiedlich groß ausgebildet sind und einen unterschiedlich großen Außenumfang aufweisen. Die axialen Stirnseiten des Filtermediumkörpers 6 sind von jeweils einer Endscheibe 9, 10 strömungsdicht abgedeckt, wobei die Endscheibe 9 an der größeren Stirnseite des Filterelementes 5 offen ausgebildet ist und eine Strömungsöffnung 11 aufweist, über die das Rohfluid in den innenliegenden Strömungsraum 7 einströmen kann. Die gegenüberliegende Endscheibe 10 ist dagegen, wie Fig. 4 zu entnehmen, geschlossen ausgebildet, so dass auch der innenliegende Strömungsraum 7 an dieser Seite axial verschlossen ist.

An der geschlossen ausgebildeten Endscheibe 10 sind Nocken 12 angeformt, die sich radial nach außen erstrecken und an den Längsseiten benachbart zu den Schmalseiten positioniert sind. Die Nocken 12, die einteilig mit der Endscheibe 10 ausgebildet sind, stützen das Filterelement 5 im montierten Zustand am Filtergrundgehäuse 3 ab. In Radialrichtung ragen die Nocken 12 insbesondere in montiertem Zustand bevorzugt nicht weiter vor als die gegenüberliegende, größere Endscheibe 9.

An der Außenwand des Filtermediumkörpers 6 befindet sich ein Stützgitter 13, das insbesondere aus Kunststoff gefertigt und separat von den Endscheiben 9 und 10 ausgebildet ist. Das Stützgitter 13 stützt den Filtermediumkörper an dessen Außenwand in Radialrichtung ab. Aufgrund der radialen Durchströmung des Filtermediumkörpers 6 von innen nach außen entsteht ein nach außen gerichteter Druck im Filtermediumkörper, der von dem Stützgitter 13 aufgenommen wird. Dies stellt sicher, dass sich der Filtermediumkörper 6 durch den Druck des ihn durchströmenden Fluids nicht verformt.

Benachbart zu der Endscheibe 9, in die die Strömungsöffnung 11 für das Einführen des Rohfluids eingebracht ist, befindet sich ein Dichtungsträger 14, der Träger eines Dichtungselementes 15 ist. Der Dichtungsträger 14 ist als eine umlaufende Trägerwand ausgebildet, die in einer Ebene orthogonal zur Längsachse 8 liegt und vorzugsweise einteilig mit dem Stützgitter 13 ausgeführt ist. Der Dichtungsträger 14 ist mit einem geringen axialen Abstand zur obenliegenden Endscheibe 9 und mit einem erheblich größeren axialen Abstand zur untenliegenden Endscheibe 10 angeordnet. Der Außenumfang des Dichtungsträgers 14 besitzt eine größere radiale Erstreckung als die Außenwand des Filtermediumkörpers 6.

Das Dichtungselement 15 ist als ein Dichtring ausgebildet, der bevorzugt in eine Aufnahmenut in der Stirnseite der Trägerwand 14 auf der der benachbarten Endscheibe 9 abgewandten Seite eingesetzt ist. Das Dichtungselement 15 ist der nächstgelegenen Endscheibe 9 abgewandt und der gegenüberliegenden Endscheibe 10 zugewandt und liegt im montierten Zustand an einem umlaufenden Absatz 16 (Fig. 1) an der Innenwand des aufnehmenden Filtergrundgehäuses 3 auf. Der Absatz 16 liegt axial auf Abstand zur oberen Stirnkante des Filtergrundgehäuses 3.

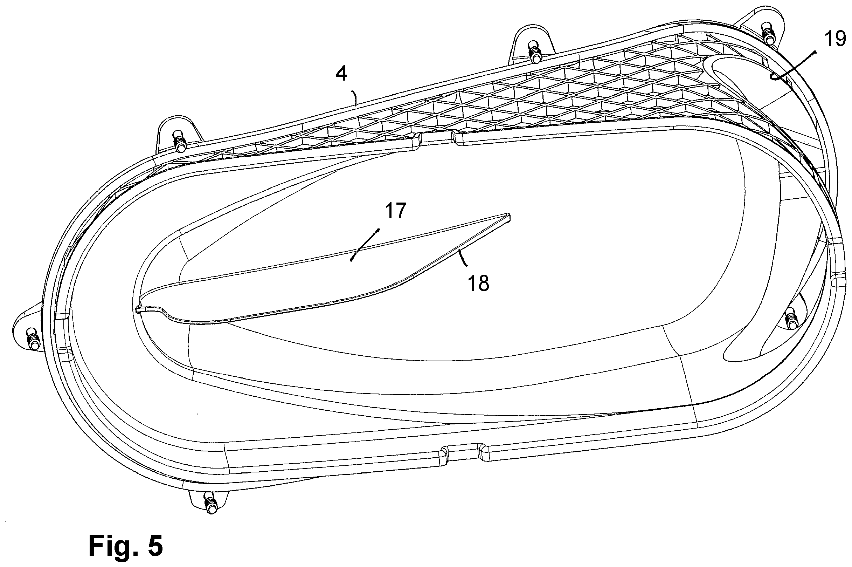

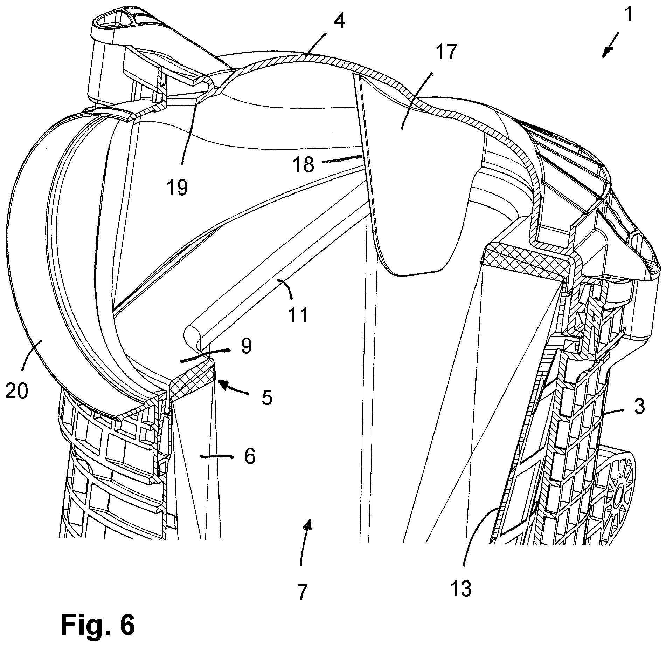

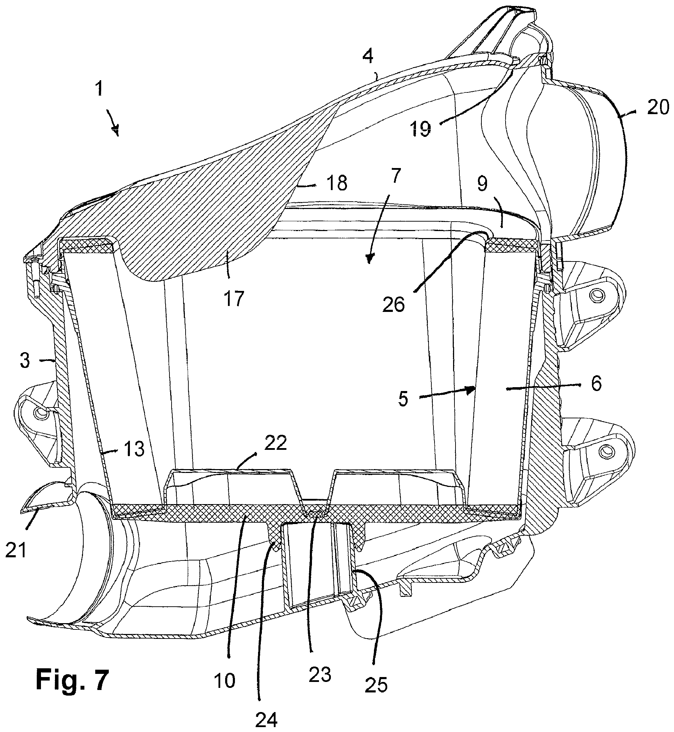

Die folgenden Ausführungen beziehen sich auf den Gehäusedeckel 4, der an seiner Innenseite eine schwertförmige Strömungsleitrippe 17 aufweist (Fig. 5, 6, 7). Die Strömungsleitrippe 17 ist insbesondere geradlinig und in einer Ebene liegend ausgebildet und erstreckt sich im montierten Zustand, wie Fig. 6 und 7 zu entnehmen, axial in den innenliegenden Strömungsraum 7 im Filterelement 5 hinein. Die Strömungsleitrippe 17 ist einteilig mit dem Gehäusedeckel 4 ausgebildet.

In den Gehäusedeckel 4 ist eine seitliche Einströmöffnung 19 eingebracht, über die das Rohfluid radial in die Filtereinrichtung hineinströmen kann. Die Einströmöffnung 19 im Gehäusedeckel 4 korrespondiert mit einer weiteren Einströmöffnung 20, die in das Filtergrundgehäuse 3 eingebracht ist. Bei aufgesetztem Gehäusedeckel 4 liegen die Einströmöffnungen 19 und 20 übereinander, so dass ein durchgehender Strömungsweg für das Rohfluid gebildet ist. Die Stirnseite 18 der Strömungsleitrippe 17 ist im Gehäusedeckel 4 der Einströmöffnung 19 zugewandt. Die Strömungsleitrippe 17 befindet sich insbesondere mittig an der Innenseite des Gehäusedeckels 4, so dass das radial herangeführte Rohfluid von der schwertförmigen Strömungsleitrippe 17 geteilt wird und außerdem eine verbesserte axiale Weiterströmung in Richtung des innenliegenden Strömungsraums 7 im Filtermediumkörper 6 erfährt.

Wie Fig. 1, 2 und 7 zu entnehmen, befindet sich am Filtergrundgehäuse 3 eine seitliche, radiale Abströmöffnung 21 für die Ableitung des gereinigten Fluids. Die Strömungslängsachsen der Einströmöffnungen 19 und 20 einerseits und der Abströmöffnung 21 andererseits verlaufen zumindest annähernd parallel. Die Ebene des Strömungsleitelementes 17 kann ebenfalls zumindest annähernd parallel zu Strömungslängsachsen von Einströmöffnungen und Abströmöffnung verlaufen, wenngleich auch Ausführungen mit nicht-paralleler Anordnung sowohl des Strömungsleitelementes 17 zu den Öffnungen 19, 20 und 21 als auch zwischen den Einströmöffnungen 19 und 20 und Abströmöffnung 21 möglich sind.

Wie Fig. 7 zu entnehmen, befindet sich im Bodenbereich des Filterelementes 5, benachbart zur unteren Endscheibe 10, ein Formkörper 22, der insbesondere einteilig mit dem Stützgitter 13 ausgebildet ist. Der Formkörper 22 ragt axial in den innenliegenden Strömungsraum 7 im Filtermediumkörper 6 hinein und sorgt für eine Stabilisierung des als Faltenfilter ausgeführten Filtermediumkörpers 6. Der Formkörper 22.verjüngt sich zu seiner offenen Stirnseite hin keilförmig und weist im mittleren Bereich einen abgesenkten Dom 23 auf, der in die untere Endscheibe 10 hineinragt. Auch die radial außenliegenden Abschnitte des Formkörpers 22 ragen in die Endscheibe 10 hinein, wodurch eine feste Verbindung zwischen dem Formkörper 22 und der unteren Endscheibe 10 erreicht wird. Der Formkörper 22 ist zumindest im Wesentlichen geradlinig ausgebildet und erstreckt sich in Längsrichtung des Filtermediumkörpers 6. Die radial außenliegenden Abschnitte des Formkörpers 22 sind mit dem Stützgitter 13 verbunden, so dass Stütz- und Haltekräfte von dem Formkörper 22 aufgenommen werden und die untere Endscheibe 10 entlastet wird.

Wie Fig. 7 in Verbindung mit Fig. 4 zu entnehmen, ist an der unteren Endscheibe 10 auf der dem innenliegenden Strömungsraum 7 axial abgewandten Seite ein ringförmiges Abstützteil 24 mittig angeformt, mit dem das Filterelement 5 auf einen gehäuseseitigen Stützdom 25 aufsetzbar ist. Der Stützdom 25 befindet sich am Boden des Filtergrundgehäuses 3. Das ringförmige Abstützteil 24 weist eine längs gestreckte Querschnittsform auf.

Wie Fig. 7 des Weiteren zu entnehmen, sind die Einströmöffnungen 19 und 20 in der Weise positioniert, dass die Stirnfläche der oben liegenden Endscheibe 9 mit den Einströmöffnungen 19 und 20 eine durchgehende, in gleicher Höhe liegende Kontur bildet. Die unten liegende Innenseite der Einströmöffnungen 19 und 20 befindet sich axial in gleicher Höhe wie die außenliegende Stirnfläche der obenliegenden Endscheibe 9. Hierdurch ist eine hindernisfreie Einströmung des Rohfluids gewährleistet.

Wie Fig. 7 in Verbindung mit Fig. 3 zu entnehmen, ist die obere Endscheibe 9 an ihrer radial innenliegenden, der zentralen Öffnung zugewandten Seite mit einer Rundung 26 versehen, die das Einströmen des Rohfluids in den innenliegenden Strömungsraum 7 erleichtert. Der Radius der Rundung 26 an der radialen Innenseite der Endscheibe 9 ist größer als an der radialen Außenseite der Endscheibe 9.

## Patentansprüche

1. Filtereinrichtung, insbesondere zur Gasfiltration, beispielsweise Luftfilter, mit einem Rundfilterelement und mit einem Filtergehäuse (2) zur Aufnahme des Rundfilterelementes, wobei das Rundfilterelement einen Filtermediumkörper (6) umfasst, dessen Wandung von dem zu reinigenden Fluid bezogen auf die Längsachse (8) des Filtermediumkörpers (6) in Radialrichtung durchströmbar ist, mit jeweils einer Endscheibe (9, 10) an gegenüberliegenden Stirnseiten des Filtermediumkörpers (6), wobei eine der Endscheiben als offene Endscheibe (9) ausgebildet ist, die eine Strömungsöffnung (11) aufweist, wobei sich die Rohseite in einem innenliegenden Strömungsraum (7) im Filtermediumkörper (6) befindet und an der Außenwand des Filtermediumkörpers (6) ein Stützgitter (13) angeordnet ist, und wobei das Filtergehäuse (2) einen Gehäusedeckel (4) umfasst, **dadurch gekennzeichnet, dass** in den Gehäusedeckel (4) eine bezogen auf die Längsachse (8) seitliche Strömungsöffnung (19) eingebracht ist, welche als Einströmöffnung (19) zum radialen Einströmen von Rohfluid ausgebildet ist, dass der Gehäusedeckel (4) an einer Innenseite eine Strömungsleitrippe (17) aufweist, welche schwertförmig ausgebildet ist und dass die Strömungsleitrippe (17) durch die Strömungsöffnung (11) in der offenen Endscheibe (9) in den innenliegenden Strömungsraum (7) des Rundfilterelementes einragt.

2. Filtereinrichtung nach Anspruch 1, **dadurch gekennzeichnet, dass** der Filtermediumkörper (6) in Radialrichtung von innen nach außen durchströmbar ist.

3. Filtereinrichtung nach zumindest einem der Ansprüche 1 oder 2, **dadurch gekennzeichnet, dass** eine weitere Einströmöffnung (20) in ein Filtergrundgehäuse (3) eingebracht ist und die Einströmöffnung (19) im Gehäusedeckel (4) derart mit der weiteren Einströmöffnung (20) korrespondiert, dass bei aufgesetztem Gehäusedeckel (4) die Einströmöffnungen (19, 20) übereinander liegen.

4. Filtereinrichtung nach zumindest einem der Ansprüche 1 bis 3, **dadurch gekennzeichnet, dass die** Strömungsleitrippe (17) eine Krümmung aufweist, bevorzugt derart, dass ein über die Einströmöffnung (19) des Gehäusedeckels (4) radial herangeführte Fluidströmung durch die Strömungsleitrippe (17) eine Ablenkung in Richtung des innenliegenden Strömungsraums (7) des Filtermediumkörpers (6) erfährt.

5. Filtereinrichtung nach zumindest einem der Ansprüche 1 bis 4, **dadurch gekennzeichnet, dass** eine Stirnseite (18) der Strömungsleitrippe (17) der Strömungsöffnung (19) im Gehäusedeckel (4) zugewandt ist.

## Claims

1. Filtering device, in particular for gas filtration, for example an air filter, having a round filter element and having a filter housing (2) for receiving the round filter element, wherein the round filter element comprises a filter medium body (6), the wall of which can be flowed through in radial direction by the fluid to be cleaned with regard to the longitudinal axis (8) of the filter medium body (6), having respectively one end disk (9, 10) on opposing front faces of the filter medium body (6), wherein one of the end disks is designed as an open end disk (9) which features a flow opening (11), wherein the raw side is located in an inside-lying flow chamber (7) in the filter medium body (6) and a support grid (13) is disposed at the outer wall of the filter medium body (6), and wherein the filter housing (2) comprises a housing cover (4), **characterized in that** a lateral flow opening (19), which is designed as an inflow opening (19) to allow a radial inflow of raw fluid, is provided in the housing cover (4) with regard to the longitudinal axis (8), that the housing cover (4) features on the interior side a flow guide rib (17) which is sword-shaped and that the flow guide rib (17) protrudes through the flow opening (11) in the open end disk (9) into the inside-lying flow chamber (7) of the round filter element.

2. Filtering device according to claim 1, **characterized in that** the filter medium body (6) can be flowed through in radial direction from the inside to the outside.

3. Filtering device according to at least one of the claims 1 or 2, **characterized in that** another inflow opening (20) is provided in the filter basic housing (3) and the inflow opening (19) in the housing cover (4) corresponds with the other inflow opening (20) in such a way that the inflow openings (19, 20) are located one above the other when the housing cover (4) is mounted.

4. Filtering device according to at least one of the claims 1 to 3, **characterized in that** the flow guide rib (17) features a bend, preferably in such a way that a fluid flow radially introduced through the inflow opening (19) of the housing cover (4) experiences a deviation by the flow guide rib (17) in the direction of the inside-lying flow chamber (7) of the filter medium body (6).

5. Filtering device according to at least one of the claims 1 to 4, **characterized in that** one front face (18) of the flow guide rib (17) faces the flow opening (19) in the housing cover (4).

## Revendications

1. Dispositif de filtration, notamment destiné à la filtration de gaz, par exemple un filtre à air, ayant un élément filtrant rond et ayant un boîtier de filtre (2) pour réceptionner l'élément filtrant rond, l'élément filtrant rond comprenant un corps de milieu filtrant (6) dont la paroi peut être traversée par le fluide à nettoyer en sens radial par rapport à l'axe longitudinal (8) du corps de milieu filtrant (6), ayant respectivement un disque d'extrémité (9, 10) sur les faces frontales opposées du corps de milieu filtrant (6), l'un des disques d'extrémité étant conçu en tant que disque d'extrémité (9) ouvert présentant une ouverture d'écoulement (11), le côté brut se trouvant dans un espace d'écoulement (7) à l'intérieur dans le corps de milieu filtrant (6) et une grille de support (13) étant disposée sur la paroi extérieure du corps de milieu filtrant (6), et le boîtier de filtre (2) comprenant un couvercle de boîtier (4), **caractérisé en ce qu'**une ouverture d'écoulement latérale (19), qui est conçue en tant qu'ouverture d'afflux (19) pour permettre l'afflux radial du fluide brut, est réalisée dans le couvercle de boîtier (4) par rapport à l'axe longitudinal (8), que le couvercle de boîtier (4) présente une nervure de guidage d'écoulement (17) sur une face intérieure ayant la forme d'une lame et que la nervure de guidage d'écoulement (17) fait saillie à travers l'ouverture d'écoulement (11) dans le disque d'extrémité (9) dans l'espace d'écoulement (7) à l'intérieur de l'élément filtrant rond.

2. Dispositif de filtration selon la revendication 1, **caractérisé en ce que** le corps de milieu filtrant (6) peut être traversé en sens radial de l'intérieur vers l'extérieur.

3. Dispositif de filtration selon au moins l'une des revendications 1 ou 2, **caractérisé en ce qu'**une autre ouverture d'afflux (20) est réalisée dans un boîtier de base de filtre (3) et l'ouverture d'afflux (19) dans le couvercle de boîtier (4) correspond avec l'autre ouverture d'afflux (20) de telle manière que les ouvertures d'afflux (19, 20) sont superposées lorsque le couvercle de boîtier (4) est en place.

4. Dispositif de filtration selon au moins l'une des revendications 1 à 3, **caractérisé en ce que** la nervure de guidage d'écoulement (17) présente une courbure, de préférence de telle manière qu'un flux de fluides amené en sens radial par l'ouverture d'afflux (19) du couvercle de boîtier (4) est soumis à une déviation par la nervure de guidage d'écoulement (17) en direction de l'espace d'écoulement intérieur (7) du corps de milieu filtrant (6).

5. Dispositif de filtration selon au moins l'une des revendications 1 à 4, **caractérisé en ce qu'une** face frontale (18) de la nervure de guidage d'écoulement (17) fait face à l'ouverture d'écoulement (19) dans le couvercle de boîtier (4).
